# EUROPÄISCHE PATENTSCHRIFT

(11) **EP 4 117 884 B1**
(45) Veröffentlichungstag und Bekanntmachung des Hinweises auf die Patenterteilung: **06.08.2025**
(21) Anmeldenummer: 21712735.6
(22) Anmeldetag: 10.03.2021
(51) Int. Cl.: B29C 45/14, B29C 43/18, B29L 31/30, B29L 31/00, B29C 43/14

(54) **FUNKTIONALISIERTES UND ABGEDICHTETES BAUTEIL**
FUNCTIONALISED AND SEALED PART
PIÈCE FONCTIONNALISÉE ET ÉTANCHE

(30) Priorität: 12.03.2020 DE 102020106868
(43) Veröffentlichungstag der Anmeldung: 18.01.2023
(73) Patentinhaber: Kautex Textron GmbH & Co. KG, 53229 Bonn (DE)
(72) Erfinder: HÜTZEN, Markus, 53757 Sankt Augustin (DE); SIGGIA, Fabian, 51143 Köln (DE)
(74) Vertreter: Richly & Ritschel Patentanwälte PartG mbB
(86) Internationale Anmeldenummer: PCT/EP2021/056033
(87) Internationale Veröffentlichungsnummer: WO 2021/180778

(56) Entgegenhaltungen:
- EP-A1- 2 377 703
- EP-A1- 3 539 745
- EP-A2- 1 495 947
- EP-A2- 1 970 186
- WO-A1-2016/125552
- WO-A1-2018/189635
- DE-A1- 102005 012 499
- DE-A1- 102007 006 493
- DE-A1- 102015 209 519
- DE-A1- 19 927 067
- DE-T5- 112011 103 922
- DE-U1- 202015 102 088
- US-A1- 2002 157 775
- US-A1- 2008 116 701

## Beschreibung

### Hintergrund

Zur Reduzierung des Bauteilgewichts und Steigerung der Bauteilperformance kommen im Automobilbereich zunehmend Faserverbundwerkstoffe zum Einsatz. Ein Ansatz für hochbelastete, im Spritzgießverfahren hergestellte Bauteile ist das einstufige Umformen und Hinterspritzen (sogenanntes "In-Mould-Forming") von thermoplastischen, endlosfaserverstärkten Halbzeugen (sogenannten Organosheets). Ein entsprechendes Vorgehen ist auch beim Fließpressverfahren möglich. Diese Technologien kombinieren die herausragenden mechanischen Eigenschaften von endlosfaserverstärkten Faserverbundkunststoffen (FVK) mit der hohen Wirtschaftlichkeit und Möglichkeit der Funktionalisierung im Spritzgießverfahren bzw. Fließpressverfahren. Bestehende Produktanwendungen sind unter anderem Frontendmodulträger, Sitzstrukturen, Türsysteme, Fahrzeugunterbodenstruktur oder Unterfahrschutz aber auch Kraftstofftank- und Batteriegehäusesysteme. Patentdokumente US 2002/157775 A1, US 2008/116701 A1, US 2005/019648 6 A1 und EP 0743158 A1 beschreiben Funktionsbauteile.

Es wurde durch die Erfinder festgestellt, dass bei der Verwendung von derartigen Halbzeugen, die als Verstärkungskomponenten wirken, zwei Problemstellungen auftreten können:
Zum einen bieten Verstärkungskomponenten nicht die Möglichkeit einer Verschweißung bzw. Organosheets haben in der Regel eine matrixarme Randschicht (und hohen Faseranteil in der Randschicht), die im direkten Schweißverfahren z.B. Heizelementschweißen keine gute Anbindungsfähigkeit aufweist".

Zum anderen können bei der Herstellung des Bauteils, z.B. Haltelöcher im Organosheet entstehen oder beim Transport/Handling der Organosheets Durchbrüche im Organosheet durch Greifwerkzeuge wie Nadelgreifer entstehen. Dies kann bei der Verwendung von Organosheets nachteilig sein, wenn diese Organosheets später Bestandteil von Systemen sein sollen, z.B. Kraftstofftanksystemen oder Batteriegehäusen, bei denen die Dichtigkeit des Systems notwendig ist.

Zur Lösung dieser Aufgabe wird ein Bauteil und ein Verfahren zur Herstellung dieses Bauteils bereitgestellt, wie sie in den beigefügten Ansprüchen definiert sind.

### Eingehende Beschreibung

Die Erfindung ist gerichtet auf ein Bauteil umfassend eine flächige Verstärkungskomponente (2) mit einer ersten Steifigkeit und mindestens einem flächigen Aufsatz (3) aus einem Aufsatzmaterial mit einer zweiten Steifigkeit, wobei die erste Steifigkeit höher ist als die zweite Steifigkeit, wobei die flächige Verstärkungskomponente eine Ober- und Unterseite aufweist und der mindestens eine Aufsatz (3) mindestens auf der Ober- oder Unterseite der flächigen Verstärkungskomponente (2) in einem ersten Teilbereich mit der flächigen Verstärkungskomponente (2) verbunden ist.

Der Aufsatz bietet den Vorteil, dass auf ihn zusätzliche Komponenten, wie Funktionskomponenten aufgesetzt bzw. aufgeschweißt werden können. Ferner bietet der Aufsatz den Vorteil, dass er bei vorhandenen Durchbrüchen, wie blinden und nicht blinden Bohrungen in der flächigen Verstärkungskomponente zur Abdichtung der Verstärkungskomponente oder der nochmals verbesserten Verankerung des Aufsatzes in der Verstärkungskomponente verwendet werden kann.

"Flächig" im Sinne der Erfindung bedeutet, dass der Gegenstand sich in einer Fläche erstreckt, und seine vertikale Ausdehnung im Vergleich zu seiner horizontalen Ausdehnung sehr gering ist. Flächige Gegenstände besitzen am Ende ihrer horizontalen Ausdehnung eine oder mehrere Schmalseiten, die durch die horizontal sich erstreckenden Ober- und Unterseiten eingefasst werden.

Steifigkeit im Sinne der Erfindung ist die Dehnsteifigkeit, Schubsteifigkeit, Biegesteifigkeit und/oder Torsionssteifigkeit. Dass die erste Steifigkeit höher ist als die zweite Steifigkeit bedeutet, dass die Dehnsteifigkeit, Schubsteifigkeit, Biegesteifigkeit und/oder Torsionssteifigkeit der flächigen Verstärkungskomponente höher ist als die entsprechende Dehnsteifigkeit, Schubsteifigkeit, Biegesteifigkeit und/oder Torsionssteifigkeit des flächigen Randmaterials. Die erste Steifigkeit, ausgedrückt insbesondere als die Dehnungssteifigkeit (das Elastizitätsmodul), kann mindestens 2-mal so hoch, 2 bis 250-mal, 3 bis 200-mal, oder 20 bis 100-mal so hoch sein wie die zweite Steifigkeit, ausgedrückt insbesondere als Dehnungssteifigkeit (Elastizitätsmodul).

Die Verstärkungskomponente (2) kann ein Kunststoff, ein Faserverbundstoff thermo- oder duroplastischer Art, eine Metallplatte oder eine Holzplatte sein.

Faserverbundkunststoffe bestehen aus einer Matrix und Verstärkungsfasern.

Die Matrix kann eine thermoplastische Matrix (Polyetheretherketon, PEEK; Polyphenylensulfid, PPS; Polysulfon, PSU; Polyetherimid, PEI; Polytetrafluorethen, PTFE; Polyamid z.B. PA6, PA66, PA612, oder Polyphthalamide, PPA; Polyolefin, z.B. Polyethylen, PE, oder Polypropylen, PP; oder/und Polycarbonat, PC), oder eine duroplastische Matrix (Epoxidharz, EP, z.B. 2 %; ungesättigtes Polyesterharz, UP, z.B. 8 %; Vinylesterharz, VE; Phenol-Formaldehydharz, PF, z.B. 38 %; Diallylphthalatharz, DAP; Methacrylatharz, MMA; Polyurethan, PUR; oder/und Aminoharze) sein.

Verstärkungsfasern können anorganische nicht-metallische Verstärkungsfasern (Basaltfasern, Borfasern, Glasfasern, Keramikfasern, Kieselsäurefasern, Kohlenstofffasern, oder/und Quarzfasern), organische Verstärkungsfasern (Aramidfasern, PBO-Fasern, Polyester-Fasern, Nylon-Fasern, Polyethylen-Fasern, und/oder Polymethylmethacrylat-Fasern), und/oder metallische Verstärkungsfasern (Stahlfasern) sein.

Die Verstärkungsfasern können bezogen auf ihre Länge Kurzfaser (0,1 bis 1 mm), Langfaser (1 bis 50 mm), oder Endlosfasern (> 50 mm) sein. Letztere sind wegen der sehr hohen Steifigkeit, die sie vermitteln, bevorzugt. Die Anordnung der Verstärkungsfasern kann gewebt oder gelegt sein. Die Anordnung der Verstärkungsfasern kann auch ein- oder mehrschichtig sein.

Das Aufsatzmaterial kann ein Spritzgießmaterial, insbesondere ein Spritzgießmaterial thermoplastischer Art, oder ein Fließpressmaterial, insbesondere eine Fließpressmaterial thermoplastischer oder duroplastischer Art sein. Insbesondere kann das Aufsatzmaterial ein schweißbares Randmaterial sein.

Spritzgießmaterial thermoplastischer Art kann Polyolefin (Polypropylen, PP, Polyethylen, PE), Plexiglas, PMMA, Polycarbonat, PC, Polystyrol, PS, und dessen Copolymere (z.B. ABS = Acrylnitril-Butadien-Styrol), Polyamid, PA, oder Polyoxymethylen sein.

Das thermoplastische Fließpressmaterial kann ein Long Fibre Thermoplast (LFT mit Glasfaser oder Karbonfaser), Direct Long Fibre Thermoplast (D-LFT), Glas Mat Thermoplast, GMT, oder Carbon Fiber Reinforced Polymer, CFRP, sein. Das duroplastische Fließpressmaterial kann Sheet Molding Compound (SMC mit Glasfaser oder Karbonfaser), Direct Sheet Molding Compound, D-SMC, oder Bulk Molding Compound, BMC, sein.

Das Bauteil besteht vorzugsweise aus einer flächigen Verstärkungskomponente aus einem Faserverbundkunststoff und einem Aufsatz aus einen Aufsatzmaterial aus einem Spritzgießmaterial oder Fließpressmaterial.

Die Kombination ist besonders gut geeignet, um zusätzliche Komponenten auf die Verstärkungskomponente aufzubringen bzw. führt zu sehr guten Abdichtungsergebnissen.

Die flächige Verstärkungskomponente kann mindestens einen Durchbruch von der Oberseite zur Unterseite der flächigen Verstärkungskomponente (2) aufweisen, wobei der mindestens eine flächige Aufsatz (3) den mindestens einen Durchbruch bedeckt.

Während des Herstellungsprozesses von Bauteilen können produktionsbedingt bestimmte Greifwerkzeuge, wie Nadelgreifer, Löcher oder Durchbrüche durch die Verstärkungskomponente verursachen. Durch den Aufsatz, der durch Spritzgießen oder Fließpressen auf die Verstärkungskomponente aufgebracht wird, können diese Durchbrüche abgedichtet werden, um zu verhindern, dass Fluide durch die Durchbrüche hindurchtreten. Dies kann zum einen dadurch erreicht werden, dass der Aufsatz über den Rand des Durchbruches hinausragt in einem Überlappungsbereich mit der Verstärkungskomponente oder/und durch Ausfüllen des Durchbruches mit dem Aufsatzmaterial.

Daher kann auch ein (durchgehender) Aufsatz mehr als einen Durchbruch bedecken, vorzugsweise 2, 3, 4, 5, oder 6 Durchbrüche. Der Aufsatz kann in Aufsicht kreisförmig, viereckig oder kreuzförmig sein.

Der mindestens eine flächige Aufsatz kann einen stoffschlüssig verbundenen Fortsatz aufweisen, der den mindestens einen Durchbruch ausfüllt. Dieser Fortsatz kann als Pfropfen den Durchbruch abdichten.

Die Länge des Überlappungsbereichs des flächigen Aufsatzes mit der flächigen Verstärkungskomponente kann mindestens das 2,0-fache, 2,5-fache, 3,0-fache, 3,5-fache, oder 4,0-fache der Wanddicke der flächigen Verstärkungskomponente sein.

Diese Längen des Überlappungsbereichs führen zu einer besonders guten Anhaftung des Aufsatzes an die flächige Verstärkungskomponente und damit auch zu einer besonders guten Abdichtung.

Die Länge des Überlappungsbereichs des mindestens einen flächigen Aufsatzes mit der flächigen Verstärkungskomponente kann mindestens das 2,5-fache, 3,0-fache, 3,5-fache, 4,0-fache, oder 4,5-fache des Durchmessers des mindestens einen Durchbruches sein.

Auch diese Längen des Überlappungsbereichs führen zu einer besonders guten Anhaftung des Aufsatzes an die flächige Verstärkungskomponente und damit auch zu einer besonders guten Abdichtung.

Der mindestens eine Aufsatz kann einen stoffschlüssig mit dem mindestens einem Aufsatz verbundenen Kanal aufweisen, der den mindestens einen Aufsatz mit dem Rand der flächigen Verstärkungskomponente verbindet. Der Kanal ist auf einem zweiten Teilbereich der flächigen Verstärkungskomponente (2) aufgebracht, der nicht gleich dem Teilbereich ist, auf dem der mindestens eine Aufsatz aufgebracht ist.

Der Kanal kann aus dem gleichen Randmaterial wie der Aufsatz sein. Vorzugsweise werden Kanal und Aufsatz in einem Arbeitsschritt auf die Verstärkungskomponente aufgebracht.

Ein solcher Kanal erlaubt es während des Herstellungsprozesses, das Aufsatzmaterial durch eine Bohrung im Werkzeug im Randbereich der Verstärkungskomponente zur Verstärkungskomponente zuzuführen. Dadurch kann die Anzahl der Bohrungen im Werkzeug reduziert werden, wenn das Aufsatzmaterial für die Herstellung von Komponenten verwendet wird, die ebenfalls an der Verstärkungskomponente, zum Beispiel, im Randbereich angebracht werden, obgleich der Aufsatz zum Randbereich der Verstärkungskomponente beabstandet ist. Alternativ weist das Werkzeug eine Bohrung für den jeweiligen Aufsatz auf, die direkt über der Stelle der Verstärkungskomponente platziert ist, an die der Aufsatz aufgebracht werden soll.

Der Kanal kann in der Aufsicht einen Durchmesser haben, der geringer als der Durchmesser des Aufsatzes in Aufsicht ist.

Dadurch kann der Einsatz des Aufsatzmaterials verringert werden. Alternativ kann der Aufsatz auch im Randbereich der Verstärkungskomponente angebracht sein und ohne Kanal stoffschlüssig mit einer Komponente verbunden sein, die im Randbereich der Verstärkungskomponente angebracht sein kann.

Diese Anordnung ist angebracht, wenn der Aufsatz im Randbereich der Verstärkungskomponente angebracht ist und direkt an die Komponente grenzt, die im Randbereich der Verstärkungskomponente angebracht sein kann.

Der Kanal kann mindestens einmal gegabelt sein, so dass er ab einer Verzweigungsstelle sich in mindestens zwei Teilkanäle aufteilt und der Teilkanal jeder Gabelung kann mit je einem Aufsatz verbunden sein.

Dadurch kann bei der Herstellung der Einsatz des Aufsatzmaterials reduziert werden. Es können auch mehrere Gabelungen in Serie nacheinander vorgesehen sein, so dass eine mehrfache Verzweigung der Kanäle erfolgt.

Die Höhe des mindestens einen Aufsatzes kann das 0,5-fache bis 1,5-fache der Wanddicke der flächigen Verstärkungskomponente (2) sein.

Diese Höhe hat sich als vorteilhaft für das spätere Aufbringen von Funktionskomponenten durch Schweißen bzw. das Abdichten von Durchbrüchen herausgestellt.

Das Bauteil kann mindestens zwei Aufsätze umfassen, wobei mindestens einer der mindestens zwei Aufsätze mit der Oberseite der flächigen Verstärkungskomponente in dem ersten Teilbereich verbunden ist und mindestens einer der mindestens zwei Aufsätze mit der Unterseite der flächigen Verstärkungskomponente in dem ersten oder einen weiteren Teilbereich verbunden ist.

Die Erfindung betrifft auch ein Funktionsbauteil umfassend ein Bauteil gemäß der vorstehenden Beschreibung und mindestens eine Funktionskomponente, wobei die mindestens eine Funktionskomponente mit dem mindestens einen Aufsatz verbunden ist.

Das Funktionsbauteil kann mindestens zwei Funktionskomponente und mindestens zwei Aufsätze wie oben beschrieben umfassen, wo-bei mindestens eine der mindestens zwei Funktionskomponenten mit dem mindestens einen Aufsatz auf der Oberseite der flächigen Verstärkungskomponente verbunden ist und mindestens eine der mindestens zwei Funktionskomponenten mit dem Aufsatz auf der Unterseite der flächigen Verstärkungskomponente verbunden ist.

Die Funktionskomponente kann durch Schweißen, Vernieten oder Kleben mit dem Aufsatz verbunden sein. Vorzugsweise wird die Funktionskomponente durch Schweißen mit dem Aufsatz verbunden.

Die Funktionskomponente kann eine Haltevorrichtung für ein weiteres Bauteil eines Tanks, wie ein Clip, eine Pumpe, Ventilvorrichtung, Nippel, oder eine jegliche Funktionskomponente sein, die für ein Kraftstofftanksystem oder Batteriegehäuse vorgesehen sein kann.

Die Erfindung betrifft auch ein weiteres Funktionsbauteil umfassend ein Bauteil mit mindestens einem Durchbruch, wie oben beschrieben, und mindestens eine zweite Funktionskomponente, wo-bei die zweite Funktionskomponente oder ein Abschnitt einer zweiten Funktionskomponente in dem Durchbruch vorgesehen ist, und von dem Aufsatzmaterial des Aufsatzes gegenüber der Wand des Durchbruchs abgedichtet ist.

Die zweite Funktionskomponente kann ein Schlauch, Durchführung oder Ventil sein. Die zweite Funktionskomponente kann auch an dem gleichen Aufsatz vorgesehen sein wie die erste Funktionskomponente.

Die zweite Funktionskomponente kann sowohl im Durchbruch als auch auf der Oberfläche des Aufsatzes angebracht sein und damit Merkmale auch der ersten Funktionskomponente aufweisen.

Der Radius des Aufsatzes an der Kontaktstelle zur Funktionskomponente kann mindestens 5 mm größer sein als der Radius der Funktionskomponente an der Kontaktstelle.

Ferner richtet sich die Erfindung auf einen Frontendmodulträger, eine Sitzstruktur, ein Türsystem, Fahrzeugunterbodenstruktur, Unterfahrschutz, Kraftstofftankgehäuse, flächige (Struktur-) Bauteile für Batteriesysteme oder Batterien (z.B. Zellmodulendplatten) oder Batteriegehäuse umfassend das oben beschriebene Bauteil.

Die Erfindung betriff auch ein Verfahren zur Herstellung eines Bauteils, wie oben beschrieben, umfassend:
a. Bereitstellen der Verstärkungskomponente in einer mindestens zweiteiligen Form;
b. Einbringen des Aufsatzmaterials in die Form;
c. Ausbilden des Bauteils durch Spritzgießen oder Fließpressen in der Form;
d. Entnahme des erhaltenen Bauteils aus der geöffneten Form.

Die Erfindung betriff auch ein Verfahren zur Herstellung eines Funktionsbauteils, wie oben beschrieben, umfassend:
a. Bereitstellen eines oben beschriebenen Bauteils;
b. Erhitzen des Aufsatzes bis sich der Aufsatz im plastischen Bereich befindet;
c. Anfügen einer Funktionskomponente an den Aufsatz.

Alternativ kann in Schritt b auch das Auftragen eines Klebers oder in Schritt b auch das Kontaktieren des Aufsatzes mit der Funktionskomponente gefolgt von Vernieten des Funktionsbauteils an den Aufsatz erfolgen.

Als Form wird hier jede geeignete Form bzw. Werkzeug verstanden, die/das die flächige Verstärkungskomponente aufnehmen kann und im geschlossenen Zustand um die Verstärkungskomponente herum Hohlräume bereitstellt, in die durch Kanäle das Aufsatzmaterial eingespritzt (Spritzgießen), oder Aufsatzmaterial zur Pressung bereitgestellt (Fließpressen) werden kann. Beim Spritzgießen kann die Entnahme des Bauteils nach Erreichen des Erstarrungspunktes des Aufsatzmaterials durchgeführt werden. Die Hohlräume sind so gestaltet, dass sie dem Randmaterial die Gestaltung verleihen können, die durch das oben beschriebene Bauteil definiert wird.

Ferner kann das Bauteil auch ein flächiges Randmaterial mit einer zweiten Steifigkeit umfassen, wobei die Zusammensetzung des Randmaterials dem des Aufsatzmaterials entspricht, und wobei die Verstärkungskomponente an einer ersten Schmalseite ein erstes Ende und das Randmaterial an einer zweiten Schmalseite ein in zwei Leisten aufgeteiltes zweites Ende aufweist, und die zwei Leisten des zweiten Endes das erste Ende in einem Umschließungsbereich beidseitig umschließen. Alternativ weist das zweite Ende nur eine Leiste auf, die mit dem ersten Ende überlappt. Im diesem Fall kann das erste Ende mindestens eine Einbuchtung aufweisen, die es ermöglicht, die Grenzfläche zwischen erstem Ende und zweiten Ende gegenüber dem Fall ohne Einbuchtung zu vergrößern und somit die Stabilität des Zusammenhaltes zu erhöhen.

Durch die zweiseitige Umschließung der flächigen Verstärkungskomponente durch das flächige Randmaterial bietet das Bauteil den Vorteil, dass die Stabilität des Verbundes aus flächiger Verstärkungskomponente und Randmaterial auch dann erhalten bleibt, wenn starke Kräfte auf den Verbund einwirken. Insbesondere vertikal zur Fläche des Bauteils wirkenden Kräften kann das Bauteil besser widerstehen. Ein derartiges Bauteil, das die flächige Verstärkungskomponente beidseitig umschließt, ist seitenunabhängig bzw. richtungsunabhängig mechanisch gleichermaßen stabil für eine vertikal angreifende Kraft (zum Beispiel, von innen oder außen bzw. bei Über- und Unterdruck auf gegenüberliegenden Seiten des Bauteils) und daher kraftrichtungsabhängig stabil.

In der vorliegenden Erfindung wird die Schmalseite des flächigen Randmaterials durch zwei Leisten geformt, die sich parallel zueinander über die Länge der Schmalseite des flächigen Randmaterials erstrecken. Somit können die zwei Leisten das Ende der flächigen Verstärkungskomponente zwischen sich (z.B. lückenlos, formschlüssig, und/oder stoffschlüssig) aufnehmen. Die Oberseiten bzw. Unterseiten der flächigen Verstärkungskomponente und des flächigen Randmaterials verlaufen in einer Ebene oder in mehreren Ebenen, die über die ganze Erstreckung oder einen Teil der Erstreckung der Ebenen zueinander parallel sind. Dabei können die flächigen Verstärkungskomponenten als auch das flächige Randmaterial Abschnitte enthalten, bei denen die Oberseiten bzw. Unterseiten gekrümmt sind.

In einer horizontalen Anordnung kann das Bauteil a) einen Bereich der flächigen Verstärkungskomponente, b) einen Umschließungsbereich, und c) einen Grundmaterialbereich des flächigen Randmaterials in dieser Reihenfolge aufweisen.

Ein Umschließungsbereich im Sinne der Erfindung besteht in horizontaler Anordnung aus i) einem Überlappungsbereich, das heißt, dem Bereich, in dem die Leisten mit der flächigen Verstärkungskomponente in der Fläche überlappen, und ii) einen Rampenbereich, der an den Überlappungsbereich grenzt und in dem keine Überlappung stattfindet. Im Rampenbereich kann das flächige Randmaterial eine Wanddicke aufweisen, die größer ist als die Wanddicke des flächigen Randmaterials in dem Grundmaterialbereich. Der Rampenbereich ist zwischen Überlappungsbereich und Grundbereich angeordnet.

Als Wanddicke des Randmaterials im Überlappungsbereich wird die Wanddicke einer Leiste des flächigen Randmaterials verstanden.

Die Wanddicke des Randmaterials außerhalb des Überlappungsbereichs entspricht schlicht der Wanddicke des flächigen Randmaterials in diesem Bereich.

Die beiden Leisten des flächigen Randmaterials können einen zueinander unsymmetrischen oder symmetrischen Aufbau besitzen, wobei eine gedachte Ebene durch die horizontale Mitte der flächigen Verstärkungskomponente die Spiegelebene bildet. Vorzugsweise ist der Aufbau symmetrisch. Die Stirnseiten sowohl der ersten als auch der zweiten Leiste können den gleichen Abstand zu einer Schmalseite der flächigen Verstärkungskomponente aufweisen. Das bedeutet, dass die Stirnseiten der Leisten genau übereinander angeordnet sind, oder nur um einen geringen Grad von 20 % - 0 % oder 10 % - 0 % zueinander versetzt sind.

Das flächige Randmaterial kann über den gesamten Umschließungsbereich (im Querschnitt, d.h. also quer zur Ausdehnung der Oberfläche des Randmaterials) bogenartig verlaufen.

Dadurch wird der Vorteil erreicht, dass das Randmaterial im Überlappungsbereich, in dem bei Belastung die stärksten Kräfte auftreten, besonders dick ausgeprägt ist. Ferner erlaubt der bogenartige Verlauf, dass die Wanddicke des Randmaterials von dem Anfangspunkt des Bogens auf der Seite hin zum Grundbereich des Randmaterials zu dem Endpunkt des Bogens, der an die flächige Verstärkungskomponente grenzt, zuerst langsam bis zu einem Maximalwert zunimmt und dann wieder kontinuierlich abnimmt. Somit werden stark abgesetzte Übergänge zwischen der flächigen Verstärkungskomponente und dem flächigen Randmaterial vermieden, und dem Bauteil zusätzliche Stabilität verliehen, die ein Auflösen des Bauteils unter Last vermeidet.

Bogenartig im Sinne der Erfindung kann eine fortlaufend stetige Zunahme/Abnahme der Wanddicke des Randmaterials im Übergangsbereich bezeichnen, also eine tatsächliche Bogenform. Bogenartig kann aber bedeuten, dass eine Form vorliegt, die aus mehreren geraden Abschnitten besteht, wobei die Übergänge den mehreren geraden Abschnitten durch eine Kante ausgeprägt sind und/oder durch einen Bogen gebildet werden.

Die Wanddicke des Randmaterials kann an der Position, an der das erste Ende eine Schmalseite der flächigen Verstärkungskomponente bildet, maximal sein, das heißt, dass die Oberfläche des Randmaterials an der Position, an der das erste Ende eine Schmalseite der flächigen Verstärkungskomponente bildet, den größten Abstand zur gegenüberliegenden Oberfläche der Verstärkungskomponente aufweist. Die Wanddicke des Randmaterials einer Leiste oder der jeweils beiden Leisten kann an dieser Position gleich oder größer sein als die Hälfte der Grundmaterialdicke. In der Summe können also die Wanddicken des Randmaterials an dieser Position in den Leisten gleich oder größer sein als die Grundmaterialdicke. Mit der Position der Wanddicke des Randmaterials, an der das erste Ende eine Schmalseite der flächigen Verstärkungskomponente bildet, ist eine Position auf der Oberfläche des Randmaterials bezeichnet, von der ein Lot auf das umschlossene erste Ende der Schmalseite der flächigen Verstärkungskomponente gefällt werden kann, also den Punkt, an der die Schmalseite der flächigen Verstärkungskomponente auf das zweite Ende des flächigen Randmaterials trifft.

Dadurch ist die Wanddicke des Randmaterials, bzw. der Leiste, der Leisten, die das Randmaterial an dieser Position bildet, am höchsten in dem Übergangsbereich zwischen flächiger Verstärkungskomponente und dem flächigen Randmaterial. Diese Position ist diejenige, an der es bei Belastung am ehesten zu einem Bruch des Bauteils kommen könnte. Daher wird durch die Wanddicke des Randmaterials an dieser Position einem Bruch des Bauteils entgegengewirkt.

Ferner kann die minimale Wanddicke gleich oder größer sein als die Grundmaterialwanddicke, das heißt als die Wanddicke des Randmaterials außerhalb des Umschließungsbereichs.

Daher wird durch die Wanddicke des Randmaterials an dieser Position einem Bruch des Bauteils in besonders vorteilhafter Weise entgegengewirkt.

Die Grundmaterialwanddicke kann ≥ 0,8 mm und ≤ 10 mm, ≥ 1 mm und ≤ 5 mm, ≥ 1,5 mm und ≤ 4,5 mm, ≥ 2,0 mm und ≤ 3,5 mm, ≥ 2,0 mm und ≤ 3 mm, oder ≥ 2,25 mm und ≤ 2,75 mm sein.

Der Rampenbereich kann eine Länge von ≥ 1,5 mm und ≤ 15 mm, ≥ 1,5 mm und ≤ 5, 0 mm, ≥ 2,0 mm und ≤ 4,5 mm, ≥ 2,5 mm und ≤ 4,0 mm, oder ≥ 3,00 mm und ≤ 3,50 mm haben. Die Länge des Rampenbereichs ist definiert als der Abstand zwischen dem Anfangspunkt des Bogens (auf der Seite hin zum Grundbereich des Randmaterials) und dem Punkt an dem ein Lot von der Position, an dem das Wanddicke des Randmaterials im Bogen maximal ist, auf die gedachte Verlängerung der Oberfläche des flächigen Randmaterials im Grundbereich gefällt wird.

Der Überlappungsbereich kann eine Länge von ≥ 1,5 mm und ≤ 15 mm, ≥ 5,0 mm und ≤ 15,0 mm, ≥ 7,0 mm und ≤ 12,0 mm, ≥ 8,0 mm und ≤ 11,0 mm, oder ≥ 9,00 mm und ≤ 10,00 mm haben.

Die maximale Wanddicke kann das 0,5-fache bis 2-fache, 1-fache bis 2-fache, das 1-fache bis 1,75-fache, das 1-fache bis 1,5-fache, oder das 1-fache bis 1,25-fache der Grundmaterialwanddicke betragen.

Die Länge des Überlappungsbereiches zwischen Verstärkungskomponente und Randmaterial kann das 0,5-fache bis 10-fache, 1,5- bis 8-fache, das 1,7- bis 6-fache oder das 2- bis 4-fache der Grundmaterialwanddicke betragen.

Es hat sich erwiesen, dass dieses Verhältnis zwischen Länge des Überlappungsbereiches und Randmaterial eine besonders hohe Stabilität des Bauteils sicherstellt.

In der Stirnseite mindestens einer der Leisten können Einbuchtungen (d.h. Ausnehmungen oder Aussparungen) vorgesehen sein.

Diese Einbuchtungen können durch in der Form bzw. in dem Werkzeug, die/das zur Herstellung des Bauteils verwendet wird, vorgesehene Niederhalter hergestellt werden. Niederhalter können eine Verschiebung oder ein "Aufspleißen" (z.B. Lösen des Verbunds der Gewebelagen im Falle eines Organosheets) der Verstärkungskomponente durch die anströmende (Kunststoff)Schmelze verringern bzw. vermeiden und die flächigen Verstärkungskomponente gegen den Schmelzestrom oder das angepresste Randmaterial stabilisieren, so dass dieser idealerweise mittig zur Wanddicke gehalten wird (bzw. dieser nicht einseitig zum Randbereich der Wandung gedrückt wird).

Mit den Stirnseiten der Leisten sind die Seiten der Leisten gemeint, die der flächigen Verstärkungskomponente zugewandt sind und im Überlappungsbereich liegen. Daher ragen die Einbuchtungen von der Stirnseite der Leisten aus mit einem Winkel von 80° bis 100°, vorzugsweise 90°, in die Leisten.

In beiden Leisten können Einbuchtungen vorgesehen sein.

Dies bietet den Vorteil, dass während des Herstellungsprozesses eine weitgehend symmetrische Stabilisierung der flächigen Verstärkungskomponente gegenüber dem Schmelzestrom oder dem angepressten Randmaterial erfolgt.

Die Einbuchtungen der ersten Leiste können gegenüber den Einbuchtungen der zweiten Leiste gegenüberliegend angeordnet sein.

Somit liegen in den zwei Leisten die jeweiligen Einbuchtungen direkt übereinander.

Dies bietet den Vorteil, dass während des Herstellungsprozesses eine sehr symmetrische Stabilisierung der flächigen Verstärkungskomponente gegenüber dem Schmelzestrom oder dem angepressten Randmaterial erfolgt.

Die Einbuchtungen können zwei unterschiedliche Längen aufweisen und die Einbuchtungen mit zwei unterschiedlichen Längen können alternierend angeordnet sind.

Insbesondere können in einer der Leisten eine erste Gruppe von Einbuchtungen mit einer Länge und eine zweite Gruppe von Einbuchtungen mit zweiter Länge vorliegen, wobei die erste Länge größer als die zweite Länge ist.

Sowohl in der ersten als auch in der zweiten Leiste können diese erste Gruppe und diese zweite Gruppe von Einbuchtungen vorliegen.

Die Einbuchtungen der zweiten Gruppe von Einbuchtungen in der ersten Leiste können den Einbuchtungen der ersten Gruppe in der zweiten Leiste gegenüberliegen; und die Einbuchtungen der ersten Gruppe von Einbuchtungen in der ersten Leiste den Einbuchtungen der zweiten Gruppe in der zweiten Leiste gegenüberliegen. Dadurch alterniert die Länge der Einbuchtungen sowohl innerhalb einer Leiste als auch zwischen den Leisten.

Diese Anordnung hat den Vorteil, dass das fertige Bauteil bei Einsatz zum Beispiel in einem Fluidbehälter besonders dicht gegenüber dem Fluid ist. Ferner wird eine sichtbare Bindenaht vermieden.

Alternativ können die Einbuchtungen der zweiten Gruppe von Einbuchtungen in der ersten Leiste den Einbuchtungen der zweiten Gruppe in der zweiten Leiste gegenüberliegen; und die Einbuchtungen der ersten Gruppe von Einbuchtungen in der ersten Leiste können den Einbuchtungen der ersten Gruppe in der zweiten Leiste gegenüberliegen. Dadurch alterniert die Länge der Einbuchtungen nur innerhalb der jeweiligen Leiste.

Dies kann den Vorteil haben, dass eine verbesserte Abdichtung gegenüber Fluid erreicht wird, aber der Herstellungsprozess wegen der einfacheren Form, die zur Herstellung dieser Ausführungsform benötigt wird, relativ einfach ist.

Die Einbuchtungen können eine Länge von 100% bis 25% der Länge des Überlappungsbereichs aufweisen. Vorzugsweise können die Einbuchtungen mit einer Länge von 95% bis 70% der Länge des Überlappungsbereichs vorgesehen sein, und/oder es können Einbuchtungen mit einer Länge von 25% bis 50% der Länge des Überlappungsbereichs vorgesehen sein (insbesondere können diese unterschiedlichen Längen kombiniert werden, wenn zwei Gruppen von Einbuchtungen mit unterschiedlichen Längen vorgesehen sind).

Ferner können die Einbuchtungen innerhalb einer Leiste oder innerhalb beider Leisten zueinander ungefähr äquidistant sein (ungefähr heißt bis zu 25% Abweichung des Abstandes zwischen allen Einbuchtungen um einen Mittelwert des Abstandes). Insbesondere können die Abstände zwischen den Einbuchtungen in beiden Leisten ungefähr gleich sein. Es wird aber auch offenbart, dass je nach konstruktiven Vorgaben die Abstände zwischen den Einbuchtungen innerhalb einer oder beider Leisten zumindest in einem Teilbereich der jeweiligen Leiste (beispielsweise bis 30%) frei angepasst werden können, bzw. variabel sind.

Durch die Äquidistanz wird die Druckverteilung bei Belastung weiter verbessert.

Die Verstärkungskomponente kann aus einem Kunststoff bestehen, der mit dem Kunststoff des flächigen Randmaterials kompatibel ist, so dass sich eine stoffschlüssige Verbindung zwischen Verstärkungskomponente und flächigem Randmaterial ergeben kann. Ferner kann die Verstärkungskomponente aus einem Randmaterial bestehen, dass mit dem Kunststoff des flächigen Randmaterials kompatibel ist, aber mit einem Kunststoff zumindest an den Stellen, an dem die Verstärkungskomponente mit dem flächigen Randmaterial in Kontakt tritt, oder in der Gänze, beschichtet sein, so dass sich wieder eine stoffschlüssige Verbindung zwischen Verstärkungskomponente und flächigem Randmaterial ergeben kann (In diesem Fall entspricht die Steifigkeit der beschichteten Verstärkungskomponente der Steifigkeit der unbeschichteten Verstärkungskomponente). Zusätzlich kann sich aber auch ein Formschluss ergeben.

Ferner kann die Verstärkungskomponente aus einem Randmaterial bestehen, dass mit dem Kunststoff des flächigen Randmaterials nicht kompatibel ist, so dass sich eine formschlüssige Verbindung zwischen Verstärkungskomponente und flächigem Randmaterial ergeben kann.

Die Wahl von Randmaterial und Verstärkungskomponente hängt von dem gewünschten Einsatzgebiet ab, wobei der Fachmann Materialien und Verstärkungskomponenten entsprechend dem Einsatzgebiet auswählen kann. Wesentlich ist nur, dass die Steifigkeit der Verstärkungskomponente höher ist als die Steifigkeit des Randmaterials.

Die Leisten des flächigen Randmaterials können einen Rand, der die Gesamtheit der ersten Schmalseite der Verstärkungskomponente enthält, vollständig umschließen. Alternativ kann das flächige Randmaterial diesen Rand auch nur teilweise umschließen, also z.B. nur eine Stirnseite der Verstärkungskomponente, dass Bereiche des Randes/der Schmalseite der Verstärkungskomponente frei bleiben.

Somit wird der gesamte umlaufende Rand der Verstärkungskomponente durch das flächige Randmaterial stabilisiert.

### Kurze Beschreibung der Figuren

Figur 1 illustriert das erfindungsgemäße Bauteil in einer Querschnittsansicht.
Figur 2 illustriert das erfindungsgemäße Bauteil in einer Querschnittsansicht.
Figur 3 illustriert das erfindungsgemäße Bauteil in einer Querschnittsansicht.
Figur 4 illustriert das erfindungsgemäße Bauteil in einer Querschnittsansicht.
Figur 5 illustriert das erfindungsgemäße Bauteil aus Figur 4 unter Angabe zusätzlicher Bezugszeichen.
Figur 6 illustriert das erfindungsgemäße Bauteil in einer Draufsicht.
Figur 7 illustriert das erfindungsgemäße Bauteil in einer Draufsicht.
Figur 8 illustriert das erfindungsgemäße Funktionsbauteil in Querschnittsansicht.
Figur 9 illustriert das erfindungsgemäße Funktionsbauteil in Querschnittsansicht.
Figur 10 illustriert das erfindungsgemäße Funktionsbauteil in einer Draufsicht.
Figur 11 illustriert das erfindungsgemäße Funktionsbauteil in einer Draufsicht.
Figur 12 illustriert die Verstärkungskomponente des erfindungsgemäßen Bauteils in einer Draufsicht.
Figur 13 illustriert das erfindungsgemäße Bauteil mit der Verstärkungskomponente aus Figur 12 in einer Draufsicht.
Figur 14 illustriert den Randbereich des erfindungsgemäßen Bauteils in einer Querschnittsansicht.
Figur 15 illustriert den Randbereich des erfindungsgemäßen Bauteils in einer Draufsicht.
Figur 16 illustriert das flächige Randmaterial des erfindungsgemäßen Bauteils in einer perspektivischen Sicht, in der Einbuchtungen sichtbar sind.

### Beispiel

In der nun folgenden Beschreibung bezeichnen gleiche Bezugszeichen gleiche Komponenten beziehungsweise gleiche Komponenten, so dass eine in Bezug auf eine Figur durchgeführte Beschreibung bezüglich eines Bauteils auch für die anderen Figuren gilt, so dass eine wiederholende Beschreibung vermieden wird. Ferner sind einzelne Merkmale, die in Zusammenhang mit einer Ausführungsform beschrieben wurden, auch separat in anderen Ausführungsformen verwendbar.

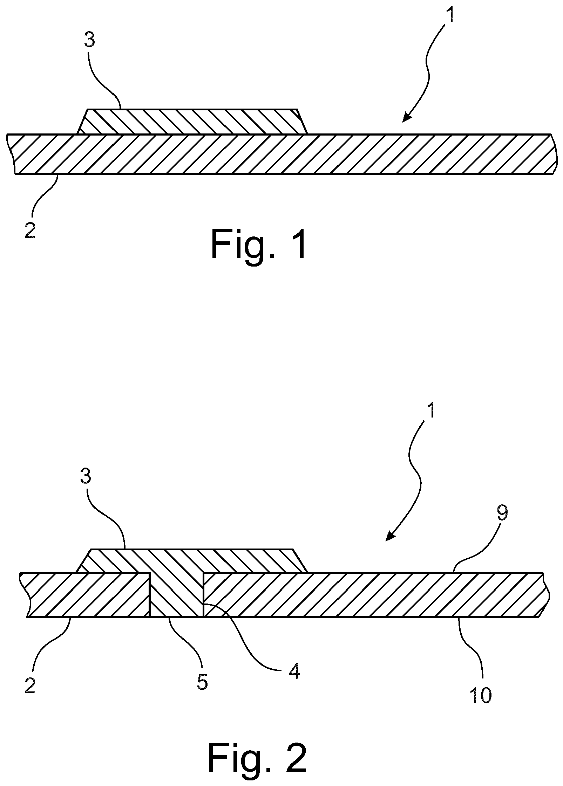

Figur 1 illustriert das erfindungsgemäße Bauteil 1 in einer Querschnittsansicht.

Der Aufsatz 3 liegt auf der Verstärkungskomponente 2 in einem Teilbereich auf und ist mit dieser fest verbunden.

Figur 2 illustriert das erfindungsgemäße Bauteil in einer Querschnittsansicht.

Wie in Figur 2 dargestellt, kann die Verstärkungskomponente 2 einen Durchbruch 4 aufweisen und der Aufsatz 3 einen Fortsatz 5, der den Durchbruch 4 abdichtend ausfüllt und damit gegen Fluid das von der Oberseite 9 zur Unterseite 10 (oder umgekehrt) durchtreten könnte, abdichten. Der Aufsatz 4 wirkt an der Kontaktfläche zur Oberseite 9 ebenfalls abdichtend. Alternativ kann auch vorgesehen sein, dass der Aufsatz 3 keinen Fortsatz enthält und nur durch die Bindung an die Kontaktfläche der Oberseite 9 ebenfalls abdichtend wirkt (nicht gezeigt).

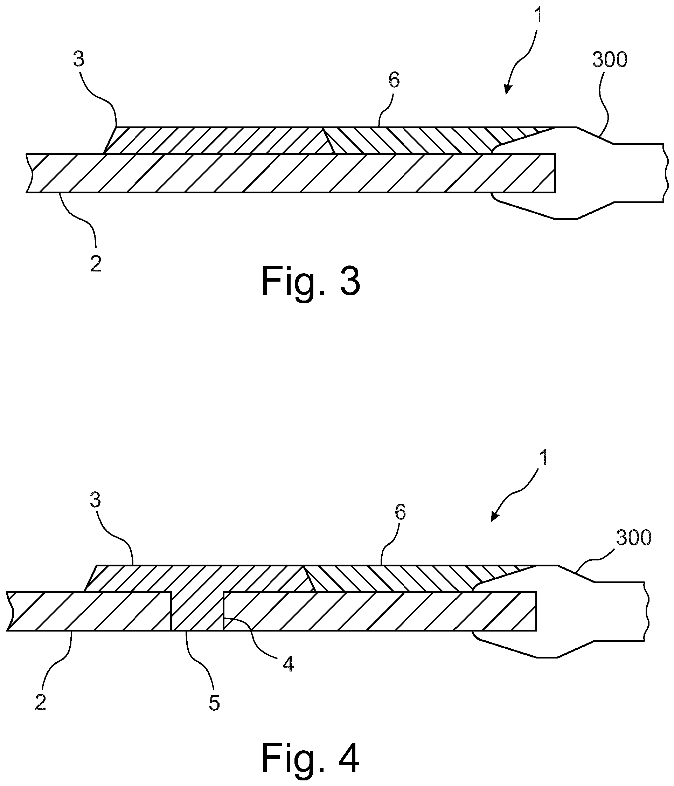

Figur 3 illustriert das erfindungsgemäße Bauteil in einer Querschnittsansicht, bei der zusätzlich ein Kanal 6 vorgesehen ist.

Der Kanal 6 verbindet den Aufsatz 3 mit einem Randbereich der Verstärkungskomponente 2 bzw. optional mit einem flächigen Randmaterial, dessen Aufbau weiter unten erläutert wird.

Figur 4 illustriert das erfindungsgemäße Bauteil in einer Querschnittsansicht, bei der der Kanal 6 und der Durchbruch 4 vorgesehen sind.

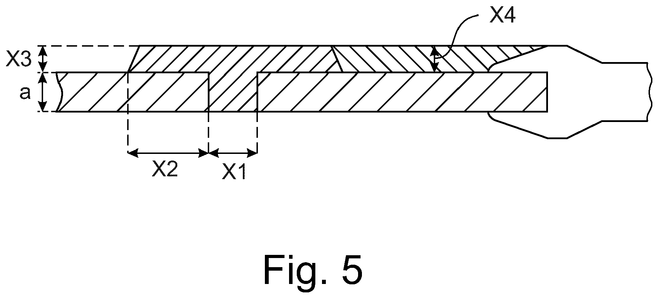

Figur 5 illustriert das erfindungsgemäße Bauteil aus Figur 4 unter Angabe zusätzlicher Elemente. Zur Vereinfachung wurden die Bezugszeichen aus Figur 4 weggelassen.

X1 bezeichnet hierbei die Breite des Durchbruchs, X2 die Überlapplänge des Aufsatzes mit der Verstärkungskomponente, X3 die Höhe des Aufsatzes und a die Höhe/Dicke der Verstärkungskomponente (auch Grundmaterialdicke genannt).

Die Breite X1 des Durchbruchs 4 entspricht der Breite X1 des Durchbruchs an seiner weitesten Stelle. Die Überlapplänge X2 des Aufsatzes 3 mit der Verstärkungskomponente versteht sich als die kürzeste Strecke, die auf der Gerade parallel zur Oberseite der Verstärkungskomponente liegt, die ausgeht von dem Mittelpunkt des Durchbruchs bis zum Rand des Aufsatzes 3, und begrenzt ist durch die Kreuzungspunkte der Geraden mit dem Rand des Aufsatzes 3 und dem Rand des Durchbruchs.

Die Höhe X3 des Aufsatzes wird orthogonal zur Oberseite 10 des Verstärkungselementes gemessen, wobei die Höhe im Mittelpunkt des Aufsatzes 3 bestimmt wird.

Die Höhe/Dicke a der Verstärkungskomponente entspricht der Dicke bzw. durchschnittlichen Dicke der Verstärkungskomponente. Die Höhe X4 des Kanals entspricht 30-100%, 50-100% oder 80-100% der Höhe a der Verstärkungskomponente.

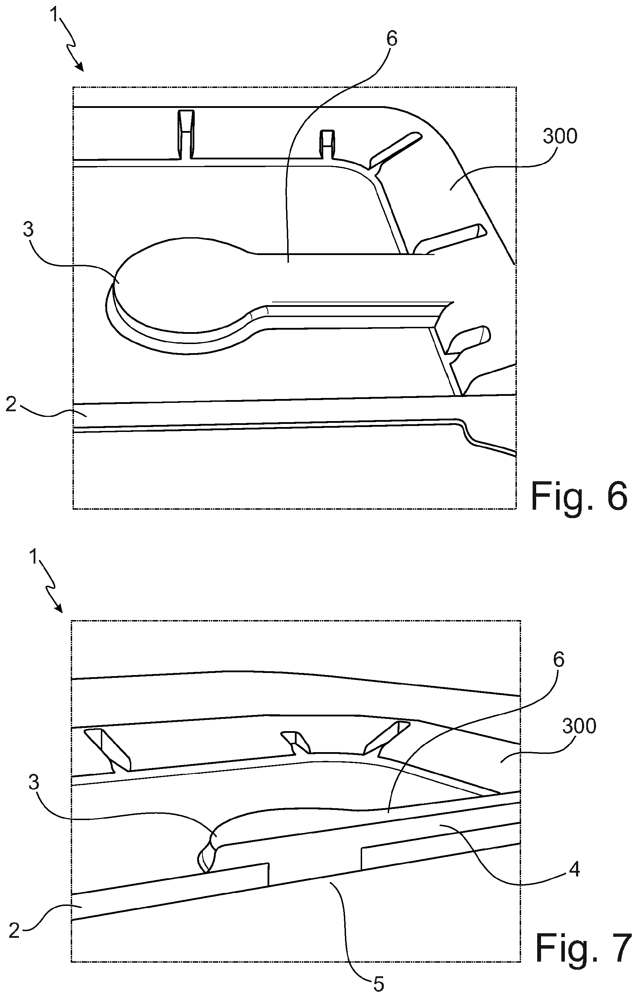

Figur 6 illustriert das erfindungsgemäße Bauteil in einer Draufsicht.

Der Aufsatz 3 kann über einen Kanal 6 mit dem flächigen Wandmaterial 300 verbunden sein. Der Kanal 6 kann schmäler als der Durchmesser des Aufsatzes 3 an seiner breitesten Stelle sein.

Figur 7 illustriert das erfindungsgemäße Bauteil in einer Draufsicht und im Querschnitt.

Der Fortsatz 5 des Aufsatzes 3 füllt den Durchbruch 4 aus.

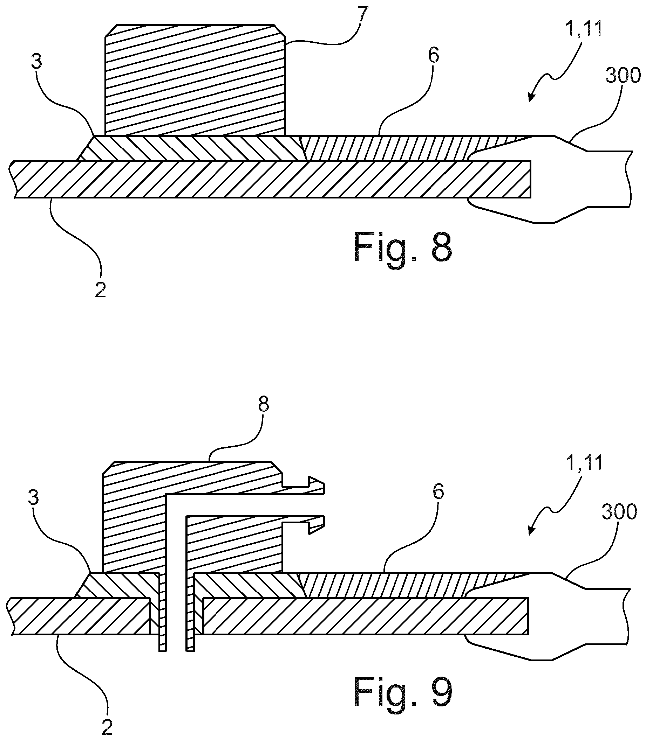

Figur 8 illustriert das erfindungsgemäße Funktionsbauteil in Querschnittsansicht.

Diese Figur 8 unterscheidet sich von der Figur 3 nur durch das auf dem Aufsatz 3 aufgebrachte Funktionskomponente 7. Der Aufsatz 3 verbessert die Verbindung von Funktionskomponente 7 an die Verstärkungskomponente 2, da sie mehr schweißbare Komponenten enthält als die Verstärkungskomponente.

Figur 9 illustriert das erfindungsgemäße Funktionsbauteil in Querschnittsansicht. Im Gegensatz zu Figur 8 weist hier die Verstärkungskomponente 2 auch einen Durchbruch 4 auf. Der Durchbruch wird in Figur 9 dazu verwendet, eine Funktionskomponente von der Oberseite 9 zur Unterseite 10 hindurchzuführen. Durch den Fortsatz 5 hindurch kann beispielsweise ein Kanal hindurchgeführt wird, der seinerseits gegenüber dem Rand des Durchbruchs 4 abgedichtet ist.

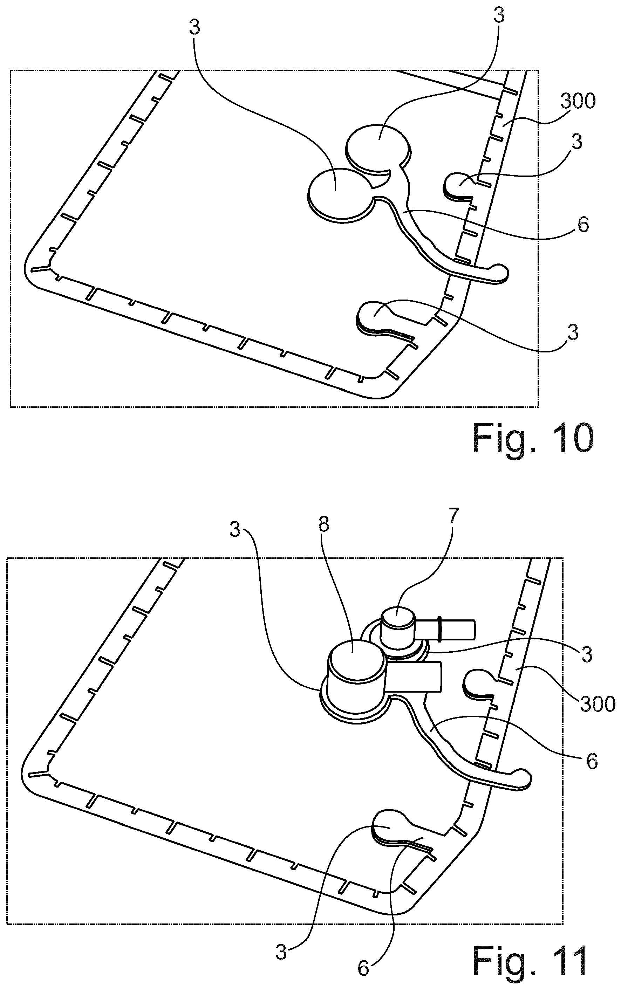

Figur 10 illustriert das erfindungsgemäße Bauteil in einer Draufsicht vor der Anbringung einer Funktionskomponente 7, 8. Wie zu erkennen, kann das Bauteil über Kanäle 6 mit dem flächigen Randmaterial 300 verbunden sein (Aufsätze 6 in der unteren und mittleren Hälfte der Figur 10). Diese Kanäle 6 können sich in Teilkanäle gabeln, die ihrerseits mit den Aufsätzen 3 verbunden sind (Aufsätze 6 in der Mitte der Figur 10). Alternativ kann der Aufsatz 3 ohne Kanal mit dem Randmaterial 300 verbunden sein und somit direkt an dieses grenzen (Aufsatz 6 in der rechten oberen Hälfte der Figur 10).

Figur 11 illustriert das erfindungsgemäße Funktionsbauteil in einer Draufsicht und unterscheidet sich von der Darstellung aus Figur 10 durch die angebrachten Funktionskomponenten 7, 8.

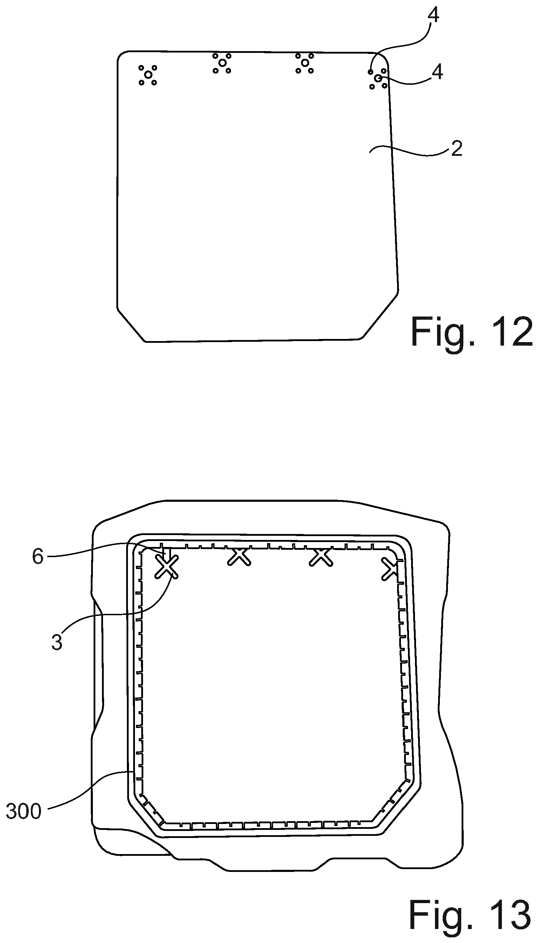

Figur 12 illustriert die Verstärkungskomponente des erfindungsgemäßen Bauteils in einer Draufsicht.

Bei der Verstärkungskomponente 2 sind mehrere Durchbrüche 4 zu erkennen, die z.B. durch Greifwerkzeuge, wie Nadelgreifer erzeugt wurden.

Figur 13 zeigt die Verstärkungskomponente 2 aus Figur 12 mit vier Aufsätzen 3 im oberen Teil der Figur. Ferner ist der Rand der Verstärkungskomponente 2 mit einem Randmaterial 300 umfasst, dass mit den Aufsätzen 3 verbunden ist. Durch die Aufsätze wird ein Verschließen und damit Abdichten der Durchbrüche 4 erreicht. Im vorliegenden Fall wurden die Durchbrüche durch einen Aufsatz in Kreuzform, bei dem die Schenkel des Kreuzes die Durchbrüche abdichten, abgedichtet.

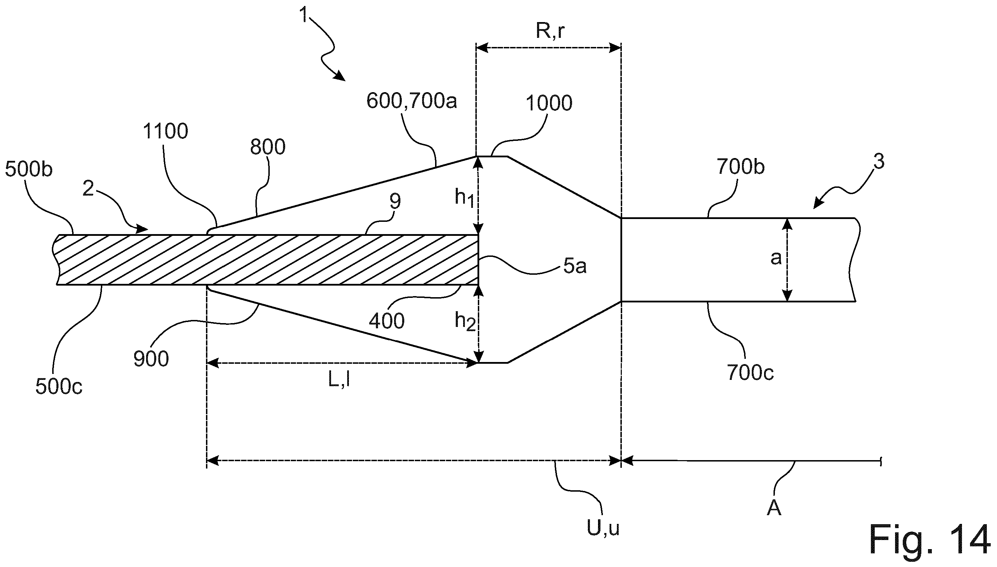

Figur 14 illustriert den Randbereich der erfindungsgemäßen Bauteils 1 in einer Querschnittsansicht.

Das Bauteil 1 umfasst eine Verstärkungskomponente 2, die flächig ausgeprägt ist und eine hohe Steifigkeit aufweist. Infrage kommen hier Faserverbundwerkstoffe thermo- oder duroplastischer Art, aber auch Metallplatten und andere Platten.

Die Verstärkungskomponente 2 weist an einem ersten Ende 400 (in Figur 1 auf der rechten Seite dargestellt) eine Schmalseite 500a auf, die durch eine Oberseite 500b und Unterseite 500c begrenzt wird. Das gegenüberliegende Ende der Verstärkungskomponente ist im Bild nicht dargestellt.

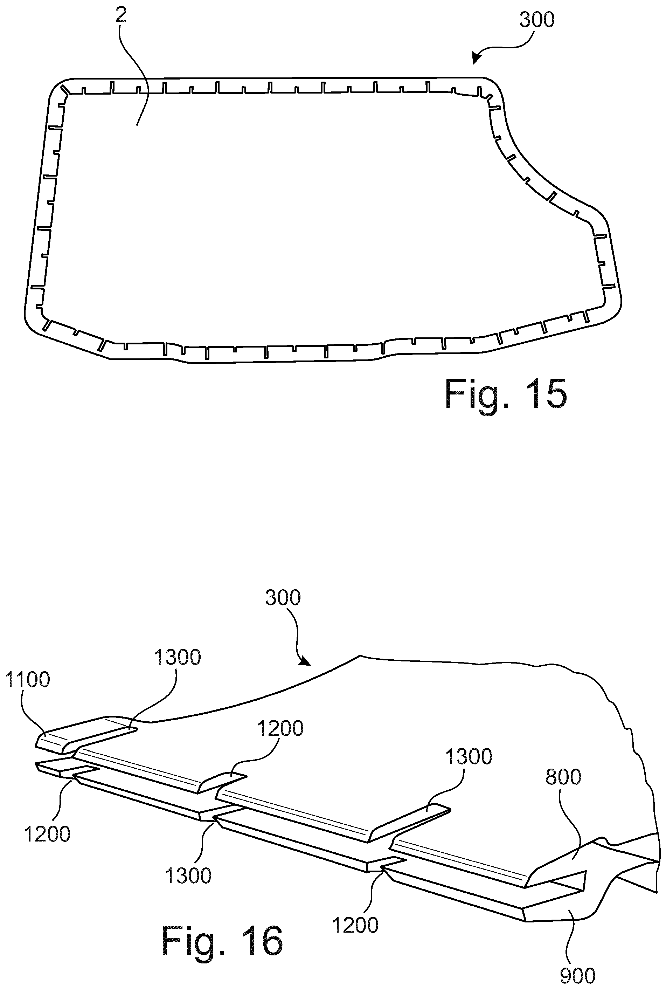

Diese Verstärkungskomponente 2 ist mit einem weniger steifen (Spritzgieß-)Randmaterial 300 in einem Umschließungsbereich U mit der Länge u beidseitig überspritzt. Dieses Randmaterial 300 ist ebenfalls weitgehend flächig ausgeprägt. Durch die beidseitige Überspritzung bildet das Randmaterial 300 an einem zweiten Ende 600 (in Figur 14 auf der linken Seites des Randmaterials 300) zwei Leisten 800, 900 aus dem Randmaterial 300, die an der Verstärkungskomponente 2 in einem Überlappungsbereich L (direkt, also ohne Hohlraumbildung) anliegen. Das gegenüberliegende Ende des Randmaterials 300 ist im Bild nicht dargestellt. Eine Darstellung des Randmaterials 300 mit den zwei Leisten 800, 900 ohne die Verstärkungskomponente 2 findet sich in Figur 16. Es ist in Figuren 15 und 16 erkennbar, dass die zwei Leisten sich an der Schmalseite des Randmaterials 300 übereinander befinden, und ungefähr gleichweit über die Verstärkungskomponente 2 ragen.

Der Umschließungsbereich U umfasst den Bereich, in dem das Randmaterial 300 sich in einem Rampenbereich R gegenüber einem Grundmaterialbereich A und von diesem ausgehend zunächst verdickt, aber noch nicht mit der Verstärkungsplatte überlappt und einem Überlappungsbereich L, in dem das Randmaterial 300 mit der Verstärkungsplatte überlappt.

Das flächige Randmaterial 300 kann über den gesamten Umschließungsbereich U (im Querschnitt, d.h. also quer zur Ausdehnung der Oberfläche des Randmaterials 300) bogenartig verlaufen, wie in Figur 14 dargestellt.

Bogenartig im Sinne der Erfindung kann eine fortlaufend stetige Zunahme/Abnahme der Wanddicke des Randmaterials 300 im Umschließungsbereich U bezeichnen, also eine tatsächliche Bogenform. Bogenartig kann aber bedeuten, dass eine Form vorliegt, die aus mehreren geraden Abschnitten besteht, wobei die Übergänge zwischen den mehreren geraden Abschnitten eckig sind und/oder durch einen Bogen gebildet werden, wie es in Figur 14 dargestellt ist.

Insbesondere kann die höchste Wanddicke h₁, h₂ des Randmaterials 300 bzw. der Leisten 800, 900 in dem Bereich über der Grenzfläche der Verstärkungskomponente 2 und des Randmaterials 300 sein. Daher kann die Wanddicke h₁, h₂ des Randmaterials 300 an der Position, an der das erste Ende 400 eine Schmalseite 500a der flächigen Verstärkungskomponente 2 bildet, maximal sein. An dieser Position, an der das erste Ende 400 eine Schmalseite 500a der flächigen Verstärkungskomponente 2 bildet, weist die Oberfläche (Oberseite 700b oder Unterseite 700c) des Randmaterials 300 den größten Abstand zur gegenüberliegenden Oberfläche (Oberseite 500b oder Unterseite 500c) der Verstärkungskomponente 2 auf.

Dadurch ist die Wanddicke h₁, h₂ des Randmaterials 300, bzw. der Leiste 800, 900, der Leisten 800, 900, die das Randmaterial 300 an dieser Position bildet, am höchsten in dem Übergangsbereich zwischen flächiger Verstärkungskomponente 2 und dem flächigen Randmaterial 300 ("maximale Wanddicke"). Diese Position ist diejenige, an der es bei Belastung am ehesten zu einem Bruch des Bauteils 1 kommen könnte. Daher wird durch die Wanddicke des Randmaterials 300 an dieser Position einem Bruch des Bauteils 1 besonders effektiv entgegengewirkt.

Ferner ist diese maximale Wanddicke h₁, h₂ gleich oder größer als die Grundmaterialwanddicke ½ a, das heißt der Wanddicke des Randmaterials 300 außerhalb des Umschließungsbereichs U.

Daher wird durch die Wanddicke h₁, h₂ des Randmaterials 300 an dieser Position einem Bruch des Bauteils 1 in besonders vorteilhafter Weise entgegengewirkt. Ferner wird dadurch sichergestellt, dass die Wanddicke auch im Übergangsbereich, d.h. dem Bereich an dem die Schmalseite 500a der Verstärkungskomponente auf flächige Randmaterial 300 trifft, mindestens der Wanddicke ½ a im Grundmaterialbereich A entspricht, und daher die Festigkeit in diesem Bereich ungefähr der entspricht, die im übrigen Bauteil 1 vorzufinden ist.

Die Länge des Überlappungsbereiches L beträgt beispielsweise das 2 bis 4-fache der Grundmaterialwanddicke a.

Es hat sich erwiesen, dass dieses Verhältnis zwischen Länge des Überlappungsbereiches L und Randmaterial 300 eine besonders hohe Stabilität des Bauteils 1 sicherstellt, während gleichzeitig ein zu hoher Einsatz des Randmaterials 300 vermieden wird.

Figur 15 illustriert das erfindungsgemäße Bauteil 1 in einer Draufsicht und Figur 16 zeigt eine perspektivische Detailansicht des Randmaterials 300 aus Figur 15.

Wie aus Figuren 15 und 16 zu entnehmen, können an der Stirnseite 1100 der Leisten 800, 900 aus dem Überlappungsbereich Einbuchtungen 1200, 1300 (d.h. Aussparungen, Ausnehmungen) vorgesehen seien.

Diese Einbuchtungen 1200, 1300 können durch in der Form bzw. in dem Werkzeug, die/das zur Herstellung des Bauteils 1 verwendet wird, vorgesehene Niederhalter hergestellt werden. Niederhalter können eine Verschiebung oder ein "Aufspleißen" (z.B. Lösen des Verbunds der Gewebelagen im Falle eines Organosheets) der Verstärkungskomponente 2 durch die anströmende (Kunststoff)Schmelze das angepresste Randmaterial verringern bzw. vermeiden und die flächige Verstärkungskomponente 2 gegen den Schmelzestrom stabilisieren, so dass dieser idealerweise mittig zur Wanddicke des Randmaterials gehalten wird (bzw. dieser nicht einseitig zum Randbereich der Wandung gedrückt wird).

In der Figur 300 sind in beiden Leisten 800,900 Einbuchtungen 1200, 1300 vorgesehen.

Dies bietet den Vorteil, dass während des Herstellungsprozesses eine weitgehend symmetrische Stabilisierung der flächigen Verstärkungskomponente 2 gegenüber dem Schmelzestrom erfolgt.

Wie in Figur 16 beispielhaft gezeigt, können die Einbuchtungen 1200, 1300 der ersten Leiste 800 gegenüber den Einbuchtungen der zweiten Leiste 900 gegenüberliegend angeordnet sein.

Somit liegen in den zwei Leisten 800, 900 die jeweiligen Einbuchtungen 1200, 1300 direkt übereinander.

Dies bietet den Vorteil, dass während des Herstellungsprozesses eine sehr symmetrische Stabilisierung der flächigen Verstärkungskomponente 2 gegenüber dem Schmelzestrom oder dem gepressten Randmaterial erfolgt.

Wie in Figuren 15 und 16 gezeigt, können die Einbuchtungen 1200, 1300 zwei unterschiedliche Längen aufweisen und die Einbuchtungen 1200, 1300 mit zwei unterschiedlichen Längen alternierend angeordnet sein. Dabei kann eine Einbuchtung 1300 mit einer langen Länge in der oberen Leiste 800, wie bei den Einbuchtungen, die links und rechts in Figur 300 angeordnet sind, einer Einbuchtung 1200 mit einer kurzen Länge in der darunterliegenden Leiste 900 gegenüberliegen. Entsprechend kann einer Einbuchtung 1200 mit einer kurzen Länge in der oberen Leiste 800, wie bei der Einbuchtung 1200, die mittig in Figur 300 angeordnet ist, eine Einbuchtung 1300 mit einer langen Länge in der darunterliegenden Leiste 900 gegenüberliegen.

Diese Anordnung hat den Vorteil, dass das fertige Bauteil 1 bei Einsatz zum Beispiel in einem Fluidbehälter besonders dicht gegenüber dem Fluid ist. Ferner wird eine sichtbare Bindenaht vermieden.

Wie in Figur 15 gezeigt, kann das Randmaterial 300 die Schmalseite 500a einer flächige Verstärkungskomponente 2 vollständig umschließen. Es ist aber auch vorstellbar, dass das Randmaterial 300 nur an einen oder mehrere Teilbereiche der flächigen Verstärkungskomponente 2 angebracht ist.

### Bezugszeichenliste

- 1:: Bauteil
- 2:: (flächige) Verstärkungskomponente
- 3:: Aufsatz
- 4:: Durchbruch
- 5:: Fortsatz
- 6:: Kanal
- 7,8:: Funktionskomponente
- 9:: Oberseite der Verstärkungskomponente
- 10:: Unterseite der Verstärkungskomponente
- 11:: Funktionsbauteil
- X1:: Breite des Durchbruchs
- X2:: Überlapplänge des Aufsatzes mit der Verstärkungskomponente
- X3:: Höhe des Aufsatzes
- a:: Höhe/Dicke der Verstärkungskomponente/Grundmaterialdicke
- 300:: (flächiges) Randmaterial
- 400:: erstes Ende der flächigen Verstärkungskomponente
- 500a:: Schmalseite der flächigen Verstärkungskomponente
- 500b:: Oberseite der flächigen Verstärkungskomponente
- 500c:: Unterseite der flächigen Verstärkungskomponente
- 600:: zweites Ende des flächigen Randmaterials
- 700a:: Schmalseite des flächigen Randmaterials
- 700b:: Oberseite des flächigen Randmaterials
- 700c:: Unterseite des flächigen Randmaterials
- 800:: erste Leiste
- 900:: zweite Leiste
- 1000:: Position der maximalen Wanddicke des Randmaterials
- 1100:: Stirnseite des Überlappungsbereichs
- 1200:: Einbuchtung, kurz
- 1300:: Einbuchtung, lang
- U, u:: Umschließungsbereich, Länge des Umschließungsbereichs
- R, r:: Rampenbereich
- A:: Grundmaterialbereich
- L, 1:: Überlappungsbereich, Länge des Überlappungsbereichs
- h₁:: Wanddicke der ersten Leiste
- h₂:: Wanddicke der zweiten Leiste

## Patentansprüche

1. Funktionsbauteil umfassend ein
- Bauteil (1) geeignet für einen Frontendmodulträger, eine Sitzstruktur, ein Türsystem, ein Kraftstofftankgehäuse, eine Fahrzeugunterbodenstruktur, einen Unterfahrschutz, ein Strukturbauteil für Batteriesysteme oder ein Batteriegehäuse, das Bauteil umfassend eine flächige Verstärkungskomponente (2) mit einer ersten Steifigkeit und mindestens einem flächigen Aufsatz (3) aus einem Aufsatzmaterial mit einer zweiten Steifigkeit, wobei die erste Steifigkeit höher ist als die zweite Steifigkeit,
wobei die flächige Verstärkungskomponente eine Ober- und Unterseite aufweist und der Aufsatz (3) mindestens mit der Ober- oder Unterseite der flächigen Verstärkungskomponente (2) in einem ersten Teilbereich der flächigen Verstärkungskomponente (2) verbunden ist, wobei der mindestens eine Aufsatz (3) einen stoffschlüssig verbundenen Kanal (6) aufweist, der den Aufsatz mit dem Rand der flächigen Verstärkungskomponente (2) verbindet und auf einem zweiten Teilbereich der flächigen Verstärkungskomponente (2) aufgebracht ist, und
dass das Bauteil (1) ein flächiges Randmaterial (300) umfasst, wo-bei die Zusammensetzung des flächigen Randmaterials (300) der Zusammensetzung des Aufsatzmaterials entspricht,
wobei die Verstärkungskomponente (2) an einer ersten Schmalseite (500a) ein erstes Ende (400) und das Randmaterial (300) an einer zweiten Schmalseite (700a) ein in zwei Leisten (800, 900) aufgeteiltes zweites Ende (600) aufweist, und die zwei Leisten (800, 900) des zweiten Endes (600) das erste Ende (400) in einem Umschließungsbereich (U) beidseitig umschließen,
die flächige Verstärkungskomponente (2) mindestens einen Durchbruch (4) von der Oberseite zur Unterseite der flächigen Verstärkungskomponente (2) aufweist, wobei der mindestens eine flächige Aufsatz (3) den mindestens einen Durchbruch (4) bedeckt; **gekennzeichnet durch**
- eine Funktionskomponente (7,8), wobei die Funktionskomponente (7,8) oder ein Abschnitt der Funktionskomponente (7,8) in dem Durchbruch (4) vorgesehen ist und von dem Aufsatzmaterial des Aufsatzes (3) gegenüber der Wand des Durchbruchs (4) abgedichtet ist.

2. Funktionsbauteil gemäß Anspruch 1 **dadurch gekennzeichnet, dass** die Verstärkungskomponente (2) ein Kunststoff, ein Faserverbundstoff thermo- oder duroplastischer Art, eine Metallplatte oder eine Holzplatte ist.

3. Funktionsbauteil gemäß einem der vorstehenden Ansprüche **dadurch gekennzeichnet, dass** das Aufsatzmaterial (3) ein Spritzgießmaterial, insbesondere ein Spritzgießmaterial thermoplastischer Art, oder ein Fließpressmaterial, insbesondere eine Fließpressmaterial thermoplastischer oder duroplastischer Art ist.

4. Funktionsbauteil gemäß Anspruch 1 **dadurch gekennzeichnet, dass** der mindestens eine flächige Aufsatz (3) einen stoffschlüssig verbundenen Fortsatz (5) aufweist, der den mindestens einen Durchbruch (4) ausfüllt.

5. Funktionsbauteil gemäß einem der vorstehenden Ansprüche **dadurch gekennzeichnet, dass** die Länge des Überlappungsbereichs des mindestens einen flächigen Aufsatzes mit der flächigen Verstärkungskomponente (2) mindestens das 2,0-fache, 2,5-fache, 3,0-fache, 3,5-fache, oder 4,0-fache der Wanddicke der flächigen Verstärkungskomponente (2) ist.

6. Funktionsbauteil gemäß einem der vorstehenden Ansprüche **dadurch gekennzeichnet, dass** die Länge des Überlappungsbereichs des mindestens einen flächigen Aufsatzes (3) mit der flächigen Verstärkungskomponente (2) mindestens das 2,5-fache, 3,0-fache, 3,5-fache, 4,0-fache, oder 4,5-fache des Durchmessers des mindestens einen Durchbruches (4) ist.

7. Funktionsbauteil gemäß einem der vorstehenden Ansprüche **dadurch gekennzeichnet, dass** der Kanal (6) mindestens einmal gegabelt ist und der Teilkanal jeder Gabelung mit je einem anderen Aufsatz (3) verbunden ist.

8. Funktionsbauteil gemäß einem der vorstehenden Ansprüche **dadurch gekennzeichnet, dass** die Höhe des mindestens einen Aufsatzes (3) das 0,5-fache bis 1,5-fache der Wanddicke der flächigen Verstärkungskomponente (2) ist.

9. Funktionsbauteil gemäß einem der vorstehenden Ansprüche **dadurch gekennzeichnet, dass** das Bauteil (1) mindestens zwei Aufsätze (3) umfasst und mindestens einer der mindestens zwei Aufsätze (3) mit der Oberseite der flächigen Verstärkungskomponente (2) in dem ersten Teilbereich verbunden ist und mindestens einer der mindestens zwei Aufsätze (3) mit der Unterseite der flächigen Verstärkungskomponente (2) in dem ersten oder einen weiteren Teilbereich verbunden ist.

10. Funktionsbauteil gemäß einem der vorstehenden Ansprüche wobei die mindestens eine Funktionskomponente (7,8) mit dem mindestens einen Aufsatz (3) verbunden ist.

11. Funktionsbauteil gemäß Anspruch 10, wobei das Funktionsbauteil mindestens zwei Funktionskomponente (7,8) und mindestens zwei Aufsätze gemäß Anspruch 12 umfasst, und wobei mindestens einer der mindestens zwei Funktionskomponenten (7,8) mit dem mindestens einen Aufsatz auf der Oberseite der flächigen Verstärkungskomponente (2) verbunden ist und mindestens einer der mindestens zwei Funktionskomponenten (7,8) mit dem Aufsatz auf der Unterseite der flächigen Verstärkungskomponente (2) verbunden ist

12. Funktionsbauteil gemäß Anspruch 10 oder 11, wobei der Radius des mindestens einen Aufsatzes (3) an der Kontaktstelle zur Funktionskomponente (7,8) mindestens 5 mm größer ist als der Radius der Funktionskomponente (7,8) an der Kontaktstelle.

13. Frontendmodulträger, Sitzstruktur, Türsystem, Kraftstofftankgehäuse, Fahrzeugunterbodenstruktur, Unterfahrschutz, Strukturbauteile für Batteriesysteme oder Batteriegehäuse umfassend ein Funktionsbauteil gemäß einem der Ansprüche oder ein Funktionsbauteil gemäß einem der Ansprüche.

14. Verfahren zur Herstellung eines Funktionsbauteils gemäß einem der vorstehenden Ansprüche umfassend:
a. Bereitstellen eines Bauteils (1) gemäß einem der vorstehenden Ansprüche;
b. Erhitzen des Aufsatzes bis sich der Aufsatz im plastischen Bereich befindet;
c. Anfügen der Funktionskomponente an den Aufsatz.

## Claims

1. Functional component comprising a
- component (1) suitable for a front end module carrier, a seat structure, a door system, a fuel tank housing, a vehicle underbody structure, an underride guard, a structural component for battery systems or a battery housing, the component comprising a flat reinforcement component (2) with a first stiffness and at least one flat attachment (3) made of an attachment material with a second stiffness, the first stiffness being higher than the second stiffness,
wherein the planar reinforcing component has an upper and lower side and the attachment (3) is connected at least to the upper or lower side of the planar reinforcing component (2) in a first partial region of the planar reinforcing component (2), wherein the at least one attachment (3) has a channel (6) connected by a material bond, which connects the attachment to the edge of the planar reinforcing component (2) and is applied to a second partial region of the planar reinforcing component (2), and
that the component (1) comprises a flat edge material (300), wherein the composition of the flat edge material (300) corresponds to the composition of the attachment material,
wherein the reinforcement component (2) has a first end (400) on a first narrow side (500a) and the edge material (300) has a second end (600) divided into two strips (800, 900) on a second narrow side (700a), and the two strips (800, 900) of the second end (600) enclose the first end (400) on both sides in an enclosure region (U), the planar reinforcing component (2) has at least one aperture (4) from the top to the bottom of the planar reinforcing component (2), wherein the at least one planar attachment (3) covers the at least one aperture (4);
**characterized by**
- a functional component (7, 8), wherein the functional component (7, 8) or a portion of the functional component (7, 8) is provided in the opening (4) and is sealed off from the wall of the opening (4) by the attachment material of the attachment (3).

2. The functional component according to claim 1, **characterized in that** the reinforcing component (2) is a plastic, a fiber composite of a thermoplastic or thermosetting type, a metal plate or a wooden plate.

3. The functional component according to any of the preceding claims, **characterized in that** the attachment material (3) is an injection molding material, in particular an injection molding material of a thermoplastic type, or an extrusion molding material, in particular an extrusion molding material of a thermoplastic or thermosetting type.

4. The functional component according to claim 1, **characterized in that** the at least one planar attachment (3) has an extension (5) that is integrally connected and fills the at least one opening (4).

5. The functional component according to any of the preceding claims, **characterized in that** the length of the overlap region of the at least one planar attachment with the planar reinforcing component (2) is at least 2.0 times, 2.5 times, 3.0 times, 3.5 times, or 4.0 times the wall thickness of the planar reinforcing component (2).

6. The functional component according to any of the preceding claims, **characterized in that** the length of the overlap region of the at least one planar attachment (3) with the planar reinforcing component (2) is at least 2.5 times, 3.0 times, 3.5 times, 4.0 times, or 4.5 times the diameter of the at least one opening (4).

7. The functional component according to any of the preceding claims, **characterized in that** the channel (6) is forked at least once and the partial channel of each fork is connected to a different attachment (3) in each case.

8. The functional component according to any of the preceding claims, **characterized in that** the height of the at least one attachment (3) is 0.5 times to 1.5 times the wall thickness of the sheet-like reinforcing component (2).

9. The functional component according to any of the preceding claims, **characterized in that** the component (1) comprises at least two attachments (3), and at least one of the at least two attachments (3) is connected to the upper side of the planar reinforcing component (2) in the first subregion, and at least one of the at least two attachments (3) is connected to the lower side of the planar reinforcing component (2) in the first or a further subregion.

10. The functional component according to any one of the preceding claims, wherein the at least one functional component (7, 8) is connected to the at least one attachment (3).

11. The functional component according to claim 10, wherein the functional component comprises at least two functional components (7, 8) and at least two attachments according to claim 12, and wherein at least one of the at least two functional components (7, 8) is connected to the at least one attachment on the upper side of the sheet-like reinforcing component (2) and at least one of the at least two functional components (7, 8) is connected to the attachment on the lower side of the sheet-like reinforcing component (2).

12. The functional component according to claim 10 or 11, wherein the radius of the at least one attachment (3) at the contact point with the functional component (7, 8) is at least 5 mm greater than the radius of the functional component (7, 8) at the contact point.

13. Front end module carrier, seat structure, door system, fuel tank housing, vehicle underbody structure, underride guard, structural components for battery systems, or battery housing comprising a functional component according to any one of the claims or a functional component according to any one of the claims.

14. A method of manufacturing a functional component according to any one of the preceding claims, comprising:
a. Providing a component (1) according to any one of the preceding claims;
b. Heating the attachment until the attachment is in the plastic range;
c. Adding the functional component to the attachment.

## Revendications

1. Pièce fonctionnelle comprenant une
- pièce (1) adaptée à un support de module d'extrémité avant, une structure de siège, un système de porte, un boîtier de réservoir de carburant, une structure de soubassement de véhicule, une protection antiencastrement, une pièce structurale pour des systèmes de batterie ou un boîtier de batterie, la pièce comprenant un composant de renforcement plat (2) comportant une première rigidité et au moins une partie de rehaussement plate (3) en un matériau de rehaussement comportant une seconde rigidité, dans laquelle la première rigidité est supérieure à la seconde rigidité,
dans laquelle le composant de renforcement plat présente une face supérieure et une face inférieure et la partie de rehaussement (3) est reliée au moins à la face supérieure ou à la face inférieure du composant de renforcement plat (2) dans une première zone partielle du composant de renforcement plat (2), dans laquelle l'au moins une partie de rehaussement (3) présente un canal (6) relié par liaison de matière qui relie la partie de rehaussement au bord du composant de renforcement plat (2) et qui est appuyé sur une seconde zone partielle du composant de renforcement plat (2), et
que la pièce (1) comprend un matériau de bord plat (300), dans laquelle la composition du matériau de bord plat (300) correspond à la composition du matériau de rehaussement,
dans laquelle le composant de renforcement (2) présente sur un premier côté étroit (500a) une première extrémité (400) et le matériau de bord (300) présente sur un second côté étroit (700a) une seconde extrémité (600) divisée en deux baguettes (800, 900), et les deux baguettes (800, 900) de la seconde extrémité (600) entourent des deux côtés la première extrémité (400) dans une zone d'entourage (U),
le composant de renforcement plat (2) présente au moins un passage (4) de la face supérieure vers la face inférieure du composant de renforcement plat (2), dans laquelle l'au moins une partie de rehaussement plate (3) recouvre l'au moins un passage (4) ; **caractérisée par**
- un composant fonctionnel (7, 8), dans laquelle le composant fonctionnel (7, 8) ou une section du composant fonctionnel (7, 8) est prévu dans le passage (4) et est rendu étanche par le matériau de rehaussement de la partie de rehaussement (3) par rapport à la paroi du passage (4).

2. Pièce fonctionnelle selon la revendication 1 **caractérisée en ce que** le composant de renforcement (2) est une matière plastique, un matériau composite fibreux de type thermoplastique ou thermodurcissable, une plaque métallique ou une plaque de bois.

3. Pièce fonctionnelle selon l'une des revendications précédentes **caractérisée en ce que** le matériau de rehaussement (3) est un matériau de moulage par injection, en particulier un matériau de moulage par injection de type thermoplastique, ou un matériau de moulage par extrusion, en particulier un matériau de moulage par extrusion de type thermoplastique ou thermodurcissable.

4. Pièce fonctionnelle selon la revendication 1 **caractérisée en ce que** l'au moins une partie de rehaussement plate (3) présente un prolongement (5) relié par liaison de matière qui remplit l'au moins un passage (4).

5. Pièce fonctionnelle selon l'une des revendications précédentes , **caractérisée en ce que** la longueur de la zone de chevauchement de l'au moins une partie de rehaussement plate avec le composant de renforcement plat (2) est au moins 2,0 fois, 2,5 fois, 3,0 fois, 3,5 fois ou 4,0 fois l'épaisseur de paroi du composant de renforcement plat (2).

6. Pièce fonctionnelle selon l'une des revendications précédentes **caractérisée en ce que** la longueur de la zone de chevauchement de l'au moins une partie de renforcement plate (3) avec le composant de renforcement plat (2) est au moins 2,5 fois, 3,0 fois, 3,5 fois, 4,0 fois, ou 4,5 fois le diamètre de l'au moins un passage (4).

7. Pièce fonctionnelle selon l'une des revendications précédentes **caractérisée en ce que** le canal (6) bifurque au moins une fois et le canal partiel de chaque bifurcation est relié à respectivement une partie de rehaussement (3) différente.

8. Pièce fonctionnelle selon l'une des revendications précédentes **caractérisée en ce que** la hauteur de l'au moins une partie de rehaussement (3) est de 0,5 fois à 1,5 fois l'épaisseur de paroi du composant de renforcement plat (2).

9. Pièce fonctionnelle selon l'une des revendications précédentes **caractérisée en ce que** la pièce (1) comprend au moins deux parties de rehaussement (3) et au moins l'une des au moins deux parties de rehaussement (3) est reliée à la face supérieure du composant de renforcement plat (2) dans la première zone partielle et au moins l'une des au moins deux parties de rehaussement (3) est reliée à la face inférieure du composant de renforcement plat (2) dans la première zone partielle ou dans une autre zone partielle.

10. Pièce fonctionnelle selon l'une des revendications précédentes, dans laquelle l'au moins un composant fonctionnel (7, 8) est relié à l'au moins une partie de rehaussement (3).

11. Pièce fonctionnelle selon la revendication 10, dans laquelle la pièce fonctionnelle comprend au moins deux composants fonctionnels (7, 8) et au moins deux parties de rehaussement selon la revendication 12, et dans laquelle au moins l'un des au moins deux composants fonctionnels (7, 8) est relié à l'au moins une partie de rehaussement sur la face supérieure du composant de renforcement plat (2) et au moins l'un des au moins deux composants fonctionnels (7, 8) est relié à la partie de rehaussement sur la face inférieure du composant de renforcement plat (2)

12. Pièce fonctionnelle selon la revendication 10 ou 11, dans laquelle le rayon de l'au moins une partie de rehaussement (3) au niveau du point de contact avec le composant fonctionnel (7, 8) est supérieur d'au moins 5 mm au rayon du composant fonctionnel (7, 8) au niveau du point de contact.

13. Support de module d'extrémité avant, structure de siège, système de porte, boîtier de réservoir de carburant, structure de plancher de véhicule, protection antiencastrement, pièces structurales pour systèmes de batterie ou boîtier de batterie comprenant une pièce fonctionnelle selon l'une des revendications ou un composant fonctionnel selon l'une des revendications.

14. Procédé pour la fabrication d'une pièce fonctionnelle selon l'une des revendications précédentes comprenant :
a. la fourniture d'une pièce (1) selon l'une des revendications précédentes ;
b. le chauffage de la partie de rehaussement jusqu'à ce que la partie de rehaussement se situe dans la zone plastique ;
c. l'ajout du composant fonctionnel à la partie de rehaussement.
